Europäisches Patentamt

European Patent Office

Office européen des brevets

(11) Publication number: **0 034 636
B1**

## (12) EUROPEAN PATENT SPECIFICATION

(45) Date of publication of patent specification: **09.01.85**

(51) Int. Cl.⁴: **B 65 G 47/52**

(21) Application number: **80901831.0**

(22) Date of filing: **21.08.80**

(86) International application number:
**PCT/US80/01076**

(87) International publication number:
**WO 81/00554 05.03.81 Gazette 81/06**

(54) **LOADER-UNLOADER SYSTEM FOR TRANSFERRING WORKPIECES.**

(30) Priority: **21.08.79 US 68411**

(43) Date of publication of application:
**02.09.81 Bulletin 81/35**

(45) Publication of the grant of the patent:
**09.01.85 Bulletin 85/02**

(84) Designated Contracting States:
**DE FR GB**

(56) References cited:
**US-A-2 247 787**
**US-A-3 418 099**
**US-A-3 598 263**
**US-A-4 018 342**

(73) Proprietor: **Acco Babcock Inc.**
**425 Post Road**
**Fairfield Connecticut 06430 (US)**

(72) Inventor: **GREENE, Larry Dean**
**Rural Route 5**
**Centralia, IL 62801 (US)**

(74) Representative: **Lewis, David Overington**
**c/o Babcock International plc Cleveland House**
**19 St. James's Square**
**London SW1Y 4LN (GB)**

Courier Press, Leamington Spa, England.

## Description

This invention relates to a loader-unloader system for transferring workpieces between a loading and an unloading station.

A loader-unloader system is known in accordance with the prior art portion of claim 1 (United States patent specification 4018342) in which generally conical shaped workpieces are transferred between a loading station and an unloading station. The system including a track located above the stations, a trolley moveable along the track and means for moving said trolley back and forth along the track. Mounted on the trolley is vacuum head assembly including a frame and a vacuum head for retaining the workpiece. The vacuum head assembly is pivotable about an axis which is perpendicular to the axis of the track to move the vacuum head in a direction parallel to the track between the loading station and the unloading station. The system operating to pick up a workpiece from the loading station with the vacuum head and transfer the workpiece on the vacuum head to the unloading station where the workpiece is deposited. The invention as claimed is in particular intended to provide an apparatus of the type indicated above which is specially designed for transferring disc-like workpieces.

According to the invention there is provided a loader-unloader system for transferring workpieces between a loading and an unloading station including a track, a trolley moveable along the track, means for moving the trolley along the track, at least one vacuum head assembly including a frame and a reciprocable vacuum head for retaining a workpiece, and means mounted on the trolley and the frame of the vacuum head assembly for pivoting the frame with respect to the trolley characterized in that the workpieces are disc like and are transferred by the system from the loading station to a chuck on a machine tool and after machining to the unloading station, a loading conveyor is provided which is adapted to deliver the disc-like workpieces successively to the loading station, an unloading conveyor is provided which is adapted to receive machine workpieces at the unloading station, the loader-unloader assembly includes two vacuum head assemblies (32, 33) supported on the trolley and pivotally mounted to pivot about an axis parallel to the axis of the track one vacuum head assembly for loading the disc-like workpieces on to the chuck (21) and one vacuum head assembly for unloading the machined disc-like workpieces from the chuck, each vacuum head assembly including a secondary frame which is reciprocable with respect to the frame of said vacuum head assembly, each vacuum head assembly including means on the secondary frame and the vacuum head for swinging the vacuum head with respect to the secondary frame about an axis which is perpendicular to the axis of reciprocating motion, through a restricted arc between a position in which the axis of the chuck and an axis of the disc-like workpiece are parallel and a position in which the axis of the disc-like workpiece subtends an acute angle to the axis of the chuck.

The invention will now be described by way of example with reference to the accompanying partly diagrammatic drawings in which:—

Figure 1 is a side elevation of a loader unloader system including a trolley, a machine tool (part only of which is shown) a loading conveyor, an unloading conveyor, a loader vacuum head assembly and an unloader vacuum head assembly;

Figure 2 is a sectional end elevation to an enlarged scale taken along the line II—II in Figure 1;

Figure 3 is an end elevation of the loader vacuum assembly in an extended and rotated position;

Figure 4 is a plan view of a portion of the loading conveyor;

Figure 5 is a partly sectioned end elevation of the loading conveyor;

Figure 6 is a cross-section taken along the line VI—VI of Figure 5;

Figure 7 is a partly sectioned end elevation of the unloading conveyor;

Figure 8 is an end elevation of a portion of the loader vacuum head assembly to an enlarged scale;

Figure 9 is a cross-section taken along the line IX—IX of Figure 8;

Figure 10 is a cross-section taken along the line X—X of Figure 8;

Figure 11 is a side elevation of the portion of the loader vacuum head assembly shown in Figure 8 indicating, retained on a vacuum head, a workpiece in chain line outline; and

Figure 12 is a partly sectioned side-elevation corresponding to Figure 11 but with the vacuum head and workpiece swung through 90°.

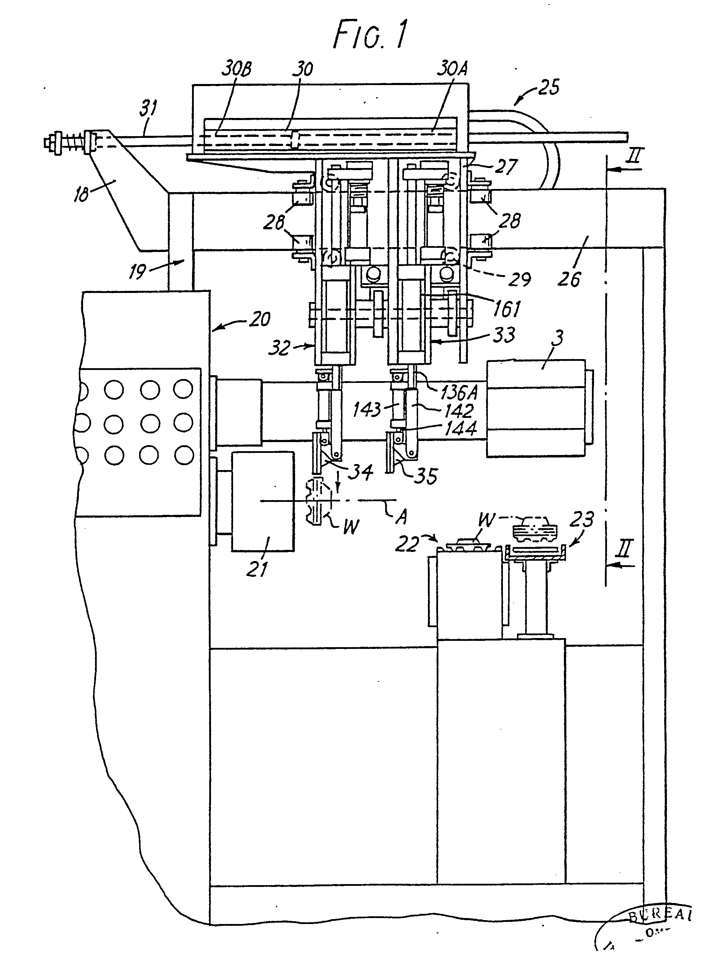

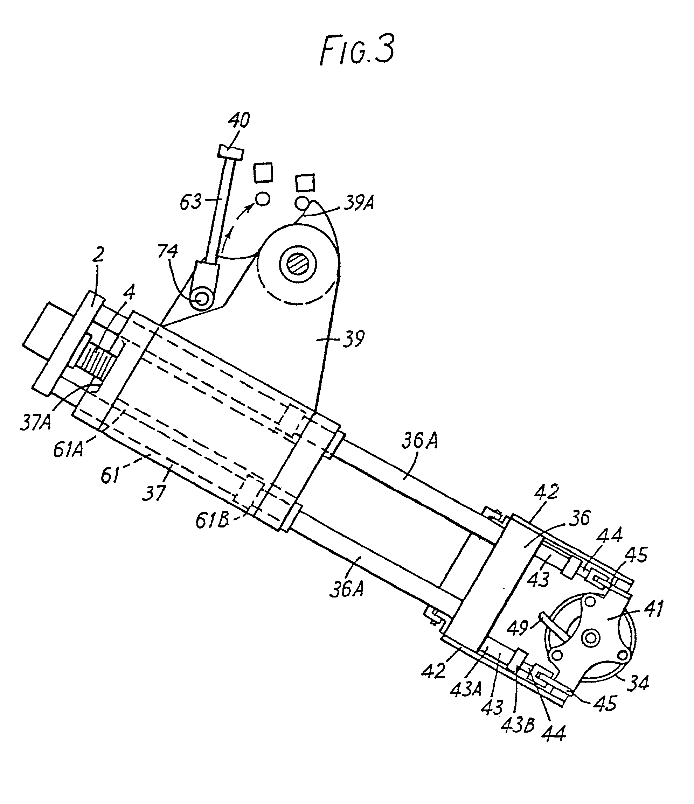

Referring to Figures 1 to 3 of the drawings the loader-unloader apparatus includes a loader-unloader assembly 25 having a main frame 19 part of which is a beam 26 which forms a track on which a trolley 27 is transferable on wheels 28, 29 mounted on the trolley. A piston motor 30 is attached to the main frame by a shaft 31 which is resiliently mounted on a bracket 18 on the beam 26. The shaft 31 extends parallel to the beam 26 and the movement of the piston motor 30 along the shaft 31 serves to transverse the trolley 27 along the beam 26 parallel to an axis A of a chuck 21 of a lathe 20.

Attached to a portion the trolley 27 remote from the piston motor 30 and spaced apart are a loading vacuum head assembly 32 and an unloading vacuum head assembly 33 operable independently of each other.

The loading vacuum head assembly 32 includes a frame 37 having an extension forming a cam bracket 39 which is pivotably attached to the trolley 27 on a shaft 60 journalled thereto, extending parallel to the beam 26.

Attached to the frame 37 are a pair of spaced apart upright double acting cylinder assemblies 61 provided with shafts 36A. A cross head 2 connects the upper ends of the shafts 36A and carries an adjustable stop 4 limiting downward travel of the shafts, a pressure relief device being incorporated in a fluid supply circuit to the cylinder assemblies (not shown), upon the stop 4 contacting an upper face 37A of the frame 37.

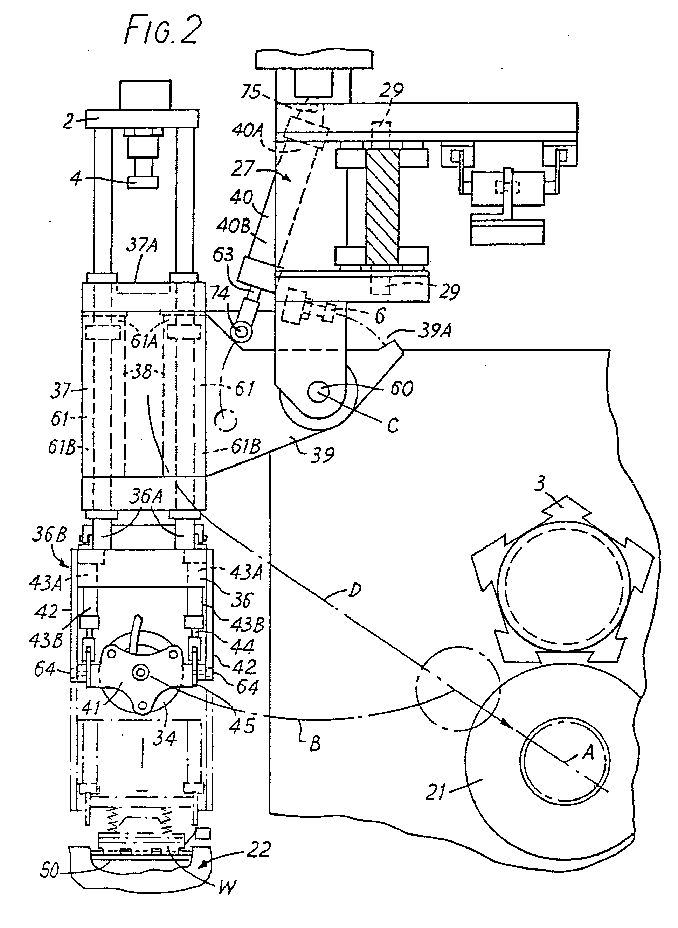

Mounted on a pivot pin 74 on the cam bracket 39 is a shaft portion 63 of a piston and cylinder assembly 40 attached to the trolley 27 at a pivot 75. On extension of the shaft 63 the loading vacuum head assembly 32 is caused to rotate about an axis C of the shaft 60 and to follow a path indicated by the chain line B shown in Figure 2. An adjustable stop 6 mounted on the trolley 27 contacts a projection 39A on the cam bracket 39 to limit rotation arising from extending the shaft 63 from the cylinder assembly 40 a pressure relief device being incorporated in a fluid supply circuit to the cylinder assembly (not shown). Attached to the ends of the shaft 36A remote from the cross head 2 is a secondary frame 36B having a pair of limbs 42 connected by a cross head 36, the frame 36B being reciprocatable with the shafts 36A on supplying fluid to the cylinders 61.

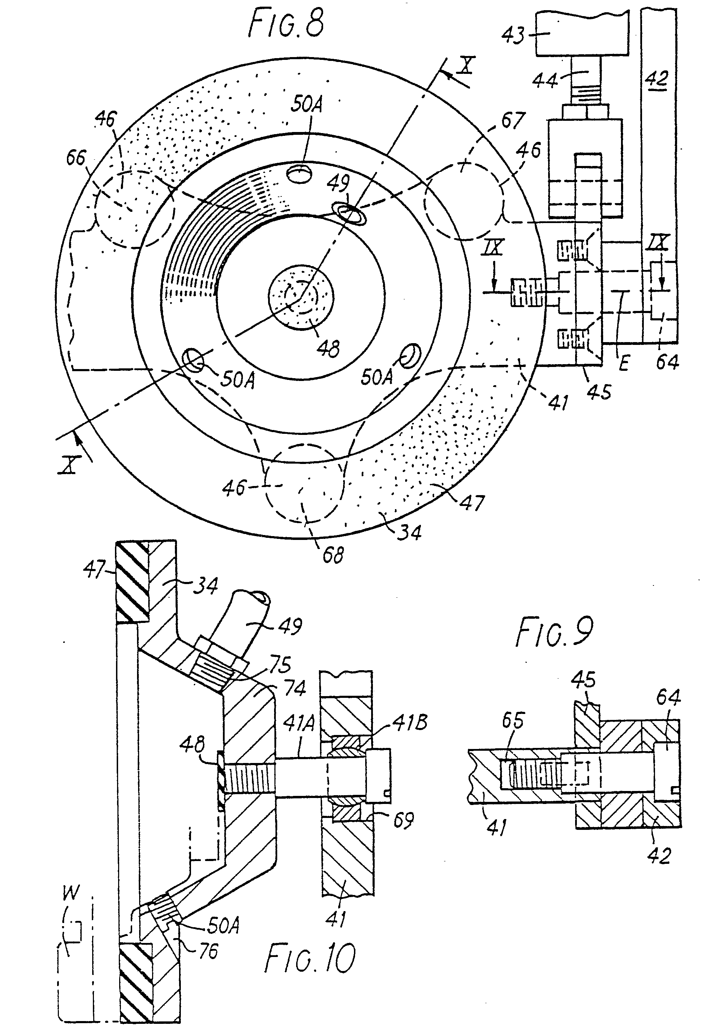

As shown in Figures 8, 9, 11 and 12 attached to the ends of the limbs 42 remote from the cross head 36 are two brackets 45, which are rotatable about bolts 64 which penetrate the brackets 45 and extend into diametrically opposed edge apertures 65 in a plate 41.

The plate 41 has three equiangularly spaced pad regions 66, 67 and 68 and a central bore 69.

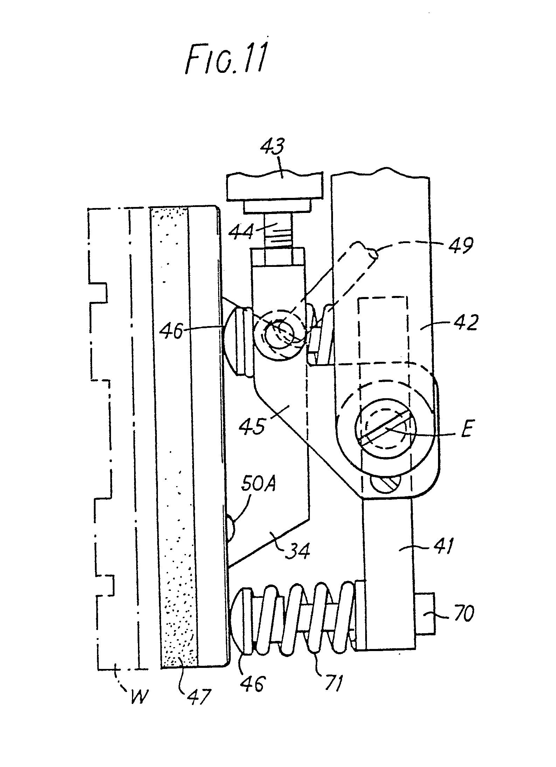

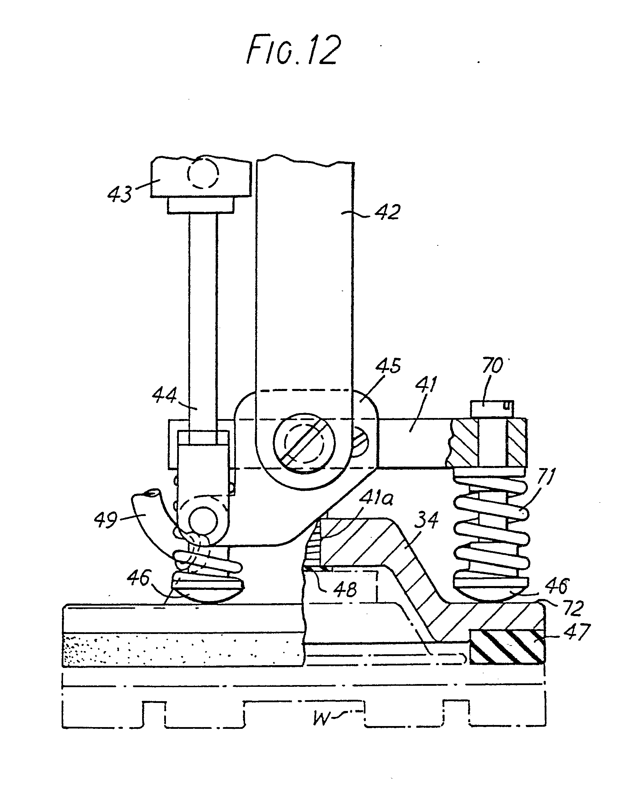

Attached to each of the brackets 45 is a shaft portion 44 of a piston and cylinder assembly 43 which on extension of the shaft portions 44 rotates the plate 41 through 90° about an axis E of the bolts 64 from a position shown in Figure 11 to a position shown in Figure 12.

As shown in Figure 10 a pin 41A extending through spherical bearing 41B located in the central bore 69 of the plate 41 is threaded into an aperture in a dished vacuum head 34.

Each triangular spaced pad region 66, 67 and 68 of the plate 41 is apertured and slidingly accommodates a bolt 70 threaded into a dome-headed unit 46, with a spring 71 urging the nut away from the plate 41 to support face 72 of the vacuum head 34.

The dished vacuum head 34 is provided with a peripheral resilient pad 47, registerable with a circumferential flange on a workpiece and a central base pad 48 positioned in the dished portion registerable with a central region of the workpiece.

The peripheral wall of a conical portion 74 of the head is penetrated by a threaded aperture 75 which receives a vacuum line attachment 49, and by three, equiangularly spaced, threaded apertures 76 carrying set screws 50A adjustable to centre the workpiece.

The unloading vacuum head assembly 33 is of identical construction as the loading vacuum head assembly 32 with the exception of parts of a dished vacuum head 35. For ease of reference, components of the unloading vacuum head assembly referred to hereinafter are prefixed by the numeral 1 in order to distinguish between the components of the two assemblies.

The vacuum head 35 attached to the unloading vacuum head assembly 33 has pads 247, 248 of different dimensions from the pads 47, 48 of the head 34 in order to accommodate the decrease in dimensions of the workpiece following machining.

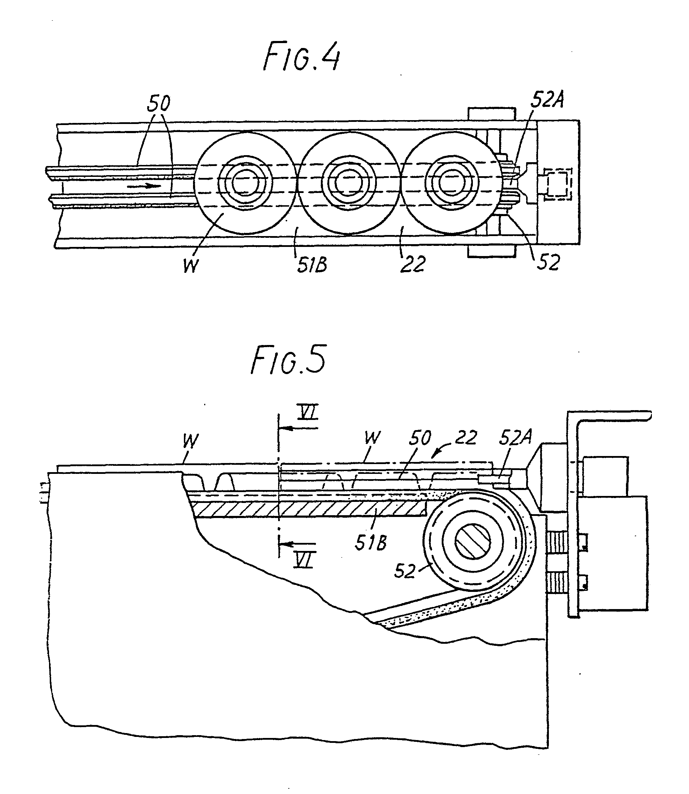

As shown in Figures 4, 5 and 6 workpieces W are delivered to the lathe 20 on a loading conveyor 22 having a pair of hexagonal cross-section belts running in grooves 51 in a plate 51B and over end pulleys 52 (one of which is shown in Figure 5). The workpieces W are placed on the conveyor 22 such that a frusto-conical portion thereof extends away from the surface of the belt 50 and are moved along by movement of the pair of belts 50 to a position abutting a stop 52A.

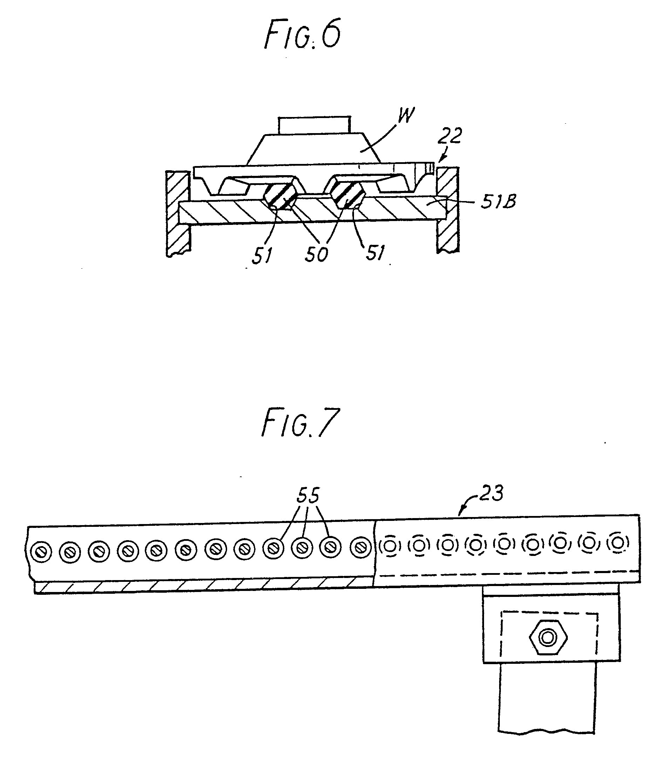

As shown in Figure 7 the unloading conveyor 23 includes a plurality of transverse rollers 55 disposed in a rectangular frame 17 inclined downwardly away from the machine tool 20.

In operation, the workpieces W are placed on the loading conveyor 22, and moved by movement of the conveyor belts about pulleys 52 to a position in which a workpiece W abuts the stop 52A. The trolley 27 is then moved along the beam 26 by supplying fluid to one side 30A of the piston motor 30 until an adjustable stop (not shown) is contacted to position the loading vacuum head assembly 32 vertically above the loading conveyor 22 in an inoperative position as shown in full outline in Figure 2. Upon the trolley 27 contacting the adjustable stop, pressure builds up in the fluid supply circuit delivering fluid to the side 30A of the piston motor 30 until a pressure relief device is actuated. Upon actuation of this device, fluid is supplied to upper ends 43A the piston and cylinder assemblies 43 to effect extension of the shaft portions 44 from the assemblies and rotation of the plate 41 to the position shown in Figure 12, abutting a limit stop (not shown). Upon the plate 41 abutting this limit stop, pressure builds up in the fluid supply circuit delivering fluid to the piston and cylinder assemblies 43 until a pressure relief device is actuated. Upon actuation of this device, fluid is supplied to the upper sides 61A of the double acting cylinders 61 of the loading vacuum head assembly so that the shafts 36A are extended downwardly from the cylinders and the vacuum head 34 is brought into engagement with the workpiece W on the loading conveyor 22 simultaneously with the stop 4 engaging the upper face 37A of the frame 37. Upon the stop 4 engaging the upper face 37A, pressure builds up in a fluid supply circuit delivering fluid to the upper sides 61A of the cylinders 61 until a pressure relief device is actuated. Upon actuation of this device the space between the workpiece and the interior of the vacuum head 34 is then partially exhausted by connecting the vacuum line attachment 49 to a source of vacuum through a two-way valve (not shown) thereby retaining the workpiece on the head with the set screws 50A centering the workpiece and the bolts 70 providing resilient support. A changeover valve in the fluid supply circuit to the cylinders 61 is then actuated to connect the upper sides 61A to drain and to supply fluid to lower sides 61B to effect raising of the shafts 36A and vacuum head 34. Upon the shafts reaching the full extent of travel upwards, pressure builds up in the circuit and a pressure relief device is actuated. Upon actuation of this device, fluid is supplied to an upper side 40A of the piston and cylinder assembly 40 to extend the shaft portion 63 from the assembly to rotate the loader vacuum head assembly until the projection 39A abuts the stop 6. Upon the projection 39A abutting the stop 6, pressure builds up in the fluid supply circuit until a pressure relief device is actuated. Upon actuation of this device, the changeover valve in the fluid supply circuit to the cylinder assemblies 61 is actuated to connect the lower sides 61B to drain and to supply fluid to the upper sides 61A to effect lowering of the shafts 36A and the vacuum head 34 to a position at which the stop 4 abuts the end face 37A of the frame 37. Upon the stop 4 abutting the end face 37 pressure builds up in the fluid supply circuit until the pressure relief device is actuated. Upon actuation of this device, a changeover valve in the fluid supply circuit to the piston and cylinder assemblies 43 is actuated and fluid is supplied to lower ends 43B of the assemblies to effect retraction of the shaft portions 44 and rotation of the plate 41 to the position shown in Figure 11, abutting a limit stop (not shown), with the workpiece aligned on the axis of the chuck 21, the position of the loading or delivery conveyor being adjusted such that the required travels coincide. Upon the plate 41 abutting the limit stop, pressure builds up in the fluid supply circuit until a pressure relief device is actuated. Upon actuation of this device, a changeover valve in the fluid supply circuit to the piston motor 30 is actuated to connect the side 30A to drain and supply fluid to the other side 30B of the piston motor to move the trolley 27 toward the chuck 21 until the workpiece W engages in the open chuck and the trolley abuts a limit stop (not shown). Upon the trolley abutting the limit stop pressure builds up in the fluid supply circuit until a pressure relief device is actuated. Upon actuation of this device, closing of the chuck and commencement of the machining operation by a tool 3 is initiated, simultaneously with venting of the interior of the vacuum head 34 to atmosphere to permit disengagement of the workpiece from the vacuum head and actuation of the changeover valve associated with the piston motor 30 to connect the side 30B to drain and to supply fluid to the side 30A to effect movement of the trolley 27 away from the chuck 21. Upon the trolley reaching the limit of travel away from the chuck, pressure builds up in the fluid supply circuit until the pressure relief device is actuated. Upon actuation of this device the changeover valve in the fluid supply circuit to the cylinders 61 is actuated to connect the upper sides 61A to drain and supply fluid to the lower sides 61B to effect retraction of the shafts 36A and raising of the vacuum head 34. Upon the shafts 36A reaching the upper limit of their travel, pressure builds up in the fluid supply circuit until the pressure relief device is actuated. Upon actuation of this device, a changeover valve in the fluid supply circuit to the piston and cylinder assembly 40 is actuated and fluid is supplied to a lower side 40B of the assembly to effect retraction of the shaft portion 63 and rotation of the loading vacuum head assembly 32 to an upright position.

Upon completion of the machining operations, the unloader vacuum head assembly 33 is actuated utilising fluid circuitry similar to that of the loader vacuum head assembly 32. Thus the unloader head assembly 33 is pivoted from the upright position by extending the shafts 163 from the piston and cylinder assembly 140 and then the shafts 136A are extended from the cylinders 161 to align the vacuum head 35 with the chuck axis. The trolley is then moved to engage the vacuum head 35 with the workpiece in the chuck, the space between the workpiece and the inner surface of the vacuum head is partially exhausted by connecting the vacuum line attachment 149 to the source of vacuum through a two-way valve (not shown) to retain the workpiece on the vacuum head and the chuck disengaged from the workpiece. The piston motor 30 is then actuated to move the trolley to the limit of travel away from the chuck, the cylinders 161 are actuated to raise the shafts 136A, the piston and cylinder assembly 140 actuated to pivot the unloader vacuum head assembly 33 to the upright position and the piston and cylinder assemblies 143 actuated to extend the shafts 144 therefrom and rotate the workpiece through 90° as in Figure 12. The cylinders 161 are then actuated to lower the vacuum head 35 and place the workpiece on the unloading or removal conveyor whereupon the workpiece is released from the vacuum head 35 by venting the interior of the vacuum head to atmosphere through the two-way valve. Finally, the cylinder assemblies 161 are actuated to raise the vacuum head 35 to a retracted position and the cylinder assemblies 143 actuated to rotate the cylinder head through 90° to a position similar to that shown of the vacuum head 34 in Figure 11.

Concurrently with the machined workpiece being released to the unloader conveyor the loading vacuum head 34 is indexed to engage and retain a further workpiece from the delivery conveyor 22, the spacing between the conveyors 22, 23 corresponding to that between the assemblies 32, 33, and the cycle is repeated.

It will be appreciated that a step-by-step indexing arrangement directing in the requisite sequence the supply of actuating fluid to the piston motor 30, the piston and cylinder assemblies 43 and 143, the cylinders 61 and 161 and the piston and cylinder assemblies 40 and 140 and connecting the vacuum line attachments 49 and 149 to the source of suction or to atmosphere may be either mechanical or electrical and may be arranged to effect some of the operations at least partly concurrently.

Further, it will be appreciated that whilst a single trolley 27 carrying both the loading and the unloading vacuum head assemblies is described, a decrease in cycle time may be effected by mounting the assemblies on separate trolleys running on separate, laterally spaced, beams such that the assemblies may be operated simultaneously and independently except for co-ordinating engagement of a workpiece with and removal of a machined workpiece from the chuck.

Whilst the arrangement is suited for high volume repetition work, it will be appreciated that different forms of workpiece may be handled by utilising alternative forms of vacuum heads appropriate to the workpieces and adjustment of the limit stops as necessary.

## Claims

1. A loader-unloader system for transferring workpieces (W) between a loading and unloading station including a track (26), a trolley (27) moveable along the track (26), means (30) for moving the trolley (27) along the track (26), at least one vacuum head assembly (32, 33) including a frame (37) and a reciprocable vacuum head (34, 35) for retaining a workpiece, and means mounted on the trolley (27) and the frame (37) of the vacuum head assembly (32, 33) for pivoting the frame (37) with respect to the trolley (27) characterized in that the workpieces (W) are disc-like and are transferred by the system from the loading station to a chuck (21) on a machine tool and after machining to the unloading station, a loading conveyor (22) is provided which is adapted to deliver the disc-like workpieces (W) successively to the loading station, an unloading conveyor (23) is provided which is adapted to receive machined workpieces at the unloading station, the loader-unloader assembly (25) includes two vacuum head assemblies (32, 33) supported on the trolley (27) and pivotally mounted to pivot about an axis (C) parallel to the axis of the track (26) one vacuum head assembly (32) for loading the disc-like workpieces (W) onto the chuck (21) and one vacuum head assembly (33) for unloading the machined disc-like workpieces (W) from the chuck (21), each vacuum head assembly (32, 33) including a secondary frame (36B) which is reciprocable with respect to the frame (37) of said vacuum head assembly, each vacuum head assembly (32, 33) including means on the secondary frame (36B) and the vacuum head (34, 35) for swinging the vacuum head (34, 35) with respect to the secondary frame (36B) about an axis (E) which is perpendicular to the axis of reciprocating motion, through a restricted arc between a position in which the axis (A) of the chuck (21) and an axis of the disc-like workpiece (W) are parallel and position in which the axis of the disc-like workpiece (W) subtends an acute angle to the axis (A) of the chuck (21).

2. A loader-unloader system as claimed in claim 1, characterized in that each vacuum head (34, 35) includes a concave member for gripping the disc-like workpiece, the concave member of the unloading vacuum head (35) having different dimensions to that of the loading vacuum head (34).

3. A loader-unloader system as claimed in claim 1 or claim 2, characterized in that the frame (37) includes an extension bracket (39) which is pivotally mounted on the axis (C) and is pivoted by means (40).

4. A loader-unloader system as claimed in any of the preceding claims, characterized in that the means for swinging the vacuum head (34, 35) with respect to the secondary frame (36B) include a bracket (45) pivotally mounted on the secondary frame (36B) and a means (43) mounted on the secondary frame (36B) for swinging the bracket (45) about the axis (E).

5. A loader-unloader system as claimed in any preceding claim, characterized in that resilient means (46, 71) yieldingly resisting axis movement extend between a resilient skirt portion (47) of each vacuum head (34, 35) and a rigid mounting (41) of each vacuum head (34, 35).

6. A loader-unloader system as claimed in any preceding claim, characterized in that the loading conveyor (22) includes spaced endless belts (50) for supporting the disc-like workpieces (W) and a stop (52A) adjacent the loading station the belts (50) being adapted to engage a disc like workpiece (W) and the stop (52A) and to hold the disc-like workpiece (W) in a loading position.

7. A loader-unloader system as claimed in Claim 1, characterized in that the means for moving said trolley (27) back and forth along said track (26) means include a double acting piston motor assembly (30).

8. A loader-unloader system as claimed in claim 1, characterized in that the means for pivoting each vacuum head assembly (32, 33) through a restricted arc (B) about the axis (C) includes a double acting piston and cylinder assembly (40).

9. A loader-unloader system as claimed in Claim 1, characterized in that the reciprocating movement of the secondary frame (36B) is effected by double acting piston and cylinder assemblies (61).

10. A loader-unloader system as claimed in Claim 1, characterized in that the means for swinging each said vacuum head (34, 35) with respect to the secondary frame (36B) about the axis (E) includes double acting piston and cylinder assemblies (43).

11. A loader-unloader as claimed in Claim 7, Claim 8, Claim 9 or Claim 10, characterized in that stop means are provided to limit travel of each of the double acting assemblies (30, 40, 61, 43) and a fluid supply circuit supplying each of the double acting assemblies (30, 40, 61, 43) is connected sequentially to the assemblies following completion of travel of a preceding double-acting assembly in the sequence.

12. A loader-unloader system as claimed in Claim 1 characterized in that the loader vacuum head assembly (32) operates to engage a workpiece (W) on the loading conveyor (22) concurrently with the unloader vacuum head assembly (33) operating to deposit a machined workpiece (W) on the unloading conveyor (23).

## Revendications

1. Système chargeur-déchargeur pour le transfert de pièces (W) entre un poste de chargement et un poste de déchargement comportant un chemin de roulement (26), un chariot (27) mobile le long du chemin de roulement (26), des moyens (30) pour déplacer le chariot (27) le long du chemin de roulement (26), au moins un ensemble de tête aspirante (32, 33) comportant un bâti (37) et une tête aspirante mobile à va-et-vient (34, 35) de retenue d'une pièce, et des moyens montés sur le chariot (27) et sur le bâti (37) du montage de tête aspirante (32, 33) pour faire pivoter le bâti (37) par rapport au chariot (27) caractérisé en ce que les pièces (W) sont en forme de disque et sont transférées par le système du poste de chargement à un mandrin (21) d'une machine-outil et après usinage au poste de déchargement, il est prévu un transporteur de chargement (22) qui est propre à amener successivement les pièces en forme de disque (W) au poste de chargement, il est prévu un transporteur de déchargement (23) qui est propre à recevoir des pièces usinées au poste de déchargement, l'ensemble chargeur-déchargeur (25) comporte deux ensembles de tête aspirante (32, 33) supportés sur le chariot (27) et montés à articulation pour pivoter autour d'une axe (C) parallèle à l'axe du chemin (26) un montage de tête aspirante (32) pour le chargement des pièces en forme de disque (W) sur le mandrin (21) et un ensemble de tête aspirante (33) pour le déchargement des pièces du genre disques usinés (W) à partir du mandrin (21), chaque ensemble de tête aspirante (32, 33) comportant un bâti secondaire (36B) qui est mobile à va-et-vient par rapport au bâti (37) dudit ensemble de tête aspirante, chaque ensemble de tête aspirante (32, 33) comportant des moyens prévus sur le bâti secondaire (36B) et sur la tête aspirante (34, 35) pour faire pivoter la tête aspirante (34, 35) par rapport au bâti secondaire (36B) autour d'un axe (E) qui est perpendiculaire à l'axe de mouvement à va-et-vient sur un arc restreint entre une position dans laquelle l'axe (A) du mandrin (21) et l'axe de la pièce en forme de disque (W) sont parallèles et une position dans laquelle l'axe de la pièce en forme de disque (W) fait un angle aigu avec l'axe (A) du mandrin (21).

2. Système chargeur-déchargeur selon la revendication 1, caractérisé en ce que chaque tête aspirante (34, 35) comporte une pièce concave de préhension de la pièce en forme de disque, la pièce concave de la tête de déchargement (35) ayant des dimensions différentes de celles de la tête aspirante de chargement (34).

3. Système chargeur-déchargeur selon la revendication 1 ou 2, caractérisé en ce que le bâti (37) comporte un support de prolongement (39) qui est articulé sur l'axe (C) et que fait pivoter un moyen (40).

4. Système chargeur-déchargeur selon l'une quelconque des revendications précédentes, caractérisé en ce que les moyens faisant pivoter les têtes aspirantes (34, 35) par rapport au bâti secondaire (36B) comportent un support (45) articulé sur le bâti secondaire (36B) et un moyen (43) monté sur le bâti secondaire (36B) pour faire pivoter le support (45) autour de l'axe (E).

5. Système chargeur-déchargeur selon l'une quelconque des revendications précédentes, caractérisé en ce que des moyens élastiques (46, 71) résistant élastiquement au déplacement axial s'étendent entre une partie de jupe élastique (47) de chaque tête aspirante (34, 35) et une monture rigide (41) de chaque tête aspirante (34, 35).

6. Système chargeur-déchargeur selon l'une quelconque des revendications précédentes, caractérisé en ce que le transporteur de chargement (22) comporte des courroies sans fin espacées (50) de support des pièces en forme de disque (W) et une butée (52A) adjacente au poste de chargement les courroies (50) étant agencées pour porter contre une pièce en forme de disque (W) et contre la butée (52A) et pour maintenir la pièce en forme de disque (W) dans une position de chargement.

7. Système chargeur-déchargeur selon la revendication 1, caractérisé en ce que les moyens de déplacement dudit chariot (27) à va-et-vient le long desdits moyens formant chemin

11    0 034 636    12

de roulement (26) comportent un ensemble moteur à piston à double effet (30).

8. Système chargeur-déchargeur selon la revendication 1, caractérisé en ce que les moyens faisant pivoter chaque ensemble de tête aspirante (32, 33) sur un arc restreint (B) autour de l'axe (C) comportent un ensemble piston-vérin à double effet (40).

9. Système chargeur-déchargeur selon la revendication 1, caractérisé en ce que le mouvement à va-et-vient du bâti secondaire (36B) est assuré par des ensembles piston-vérin à double effet (61).

10. Système chargeur-déchargeur selon la revendication 1, caractérisé en ce que les moyens faisant pivoter chaque tête aspirante (34, 35) par rapport au bâti secondaire (36B) autour de l'axe (E) comportent des ensembles piston-vérin à double effet (43).

11. Chargeur-déchargeur selon la revendication 7, 8, 9 ou 10, caractérisé en ce que des moyens de butée sont prévus pour limiter le déplacement de chacun des ensembles à double effet (30, 40, 61, 43) et un circuit d'amenée de fluide alimentant chacun des ensembles à double effet (30, 40, 61, 43) est relié successivement aux ensembles après l'achèvement du déplacement d'un ensemble à double effet précédent de la séquence.

12. Système chargeur-déchargeur selon la revendication 1, caractérisé en ce que l'ensemble de tête aspirantge de chargement (32) vient porter contre une pièce (W) présente sur le transporteur de chargement (22) concuramment avec le dépôt par l'ensemble de tête de déchargement (33) d'une pièce usinée (W) sur le transporteur de déchargement (23).

**Patentansprüche**

1. Zu- und Abführsystem zum Übergeben von Werkstücken (W) zwischen einer Lade- und einer Entladestation,

mit einer Führungsbahn (26),

mit einer Laufkatze (27), die entlang der Führungsbahn (26) bewegbar ist,

mit einem Antrieb (30) zur Bewegung der Laufkatze (27) entlang der Führungsbahn (26),

mit mindestens einer Vakuumkopf-Baugruppe (32, 33), die einen Rahmen (37) und einen hin- und hergehenden Vakuumkopf (34, 35) zum Festhalten eines Werkstücks (W) aufweist, und

mit einer Schwenkeinrichtung, die auf der Laufkatze (27) und dem Rahmen (37) der Vakuumkopf-Baugruppe (32, 33) montiert ist und zur Schwenkung des Rahmens (37) mit Bezug auf die Laufkatze (27) dient,

gekennzeichnet durch folgende Maßnahmen:

die Werkstücke (W) sind scheibenförmig und werden durch das System von der Ladestation zu einem Spannfutter (21) einer Werkzeugmaschine und nach Bearbeitung an die Entladestation übergeben;

ein Zufuhrförderer (22) ist zur aufeinanderfolgenden Übergabe der scheibenförmigen Werkstücke (W) an die Ladestation ausgebildet;

ein Abführförderer (23) ist zum Empfang von bearbeiteten Werkstücken an der Entladestation ausgebildet;

die Lade- und Entladebaugruppe (25) weist zwei Vakuumkopf-Baugruppen (32, 33) auf, die auf der Laufkatze (27) angebracht sind und zur Schwenkung um eine Achse (C) parallel zur Achse der Führungsbahn (26) schwenkbar gelagert sind, wobei die eine Vakuumkopf-Baugruppe (32) zur Zufuhr der scheibenförmigen Werkstücke (W) zum Spannfutter (21) und die andere Vakuumkopf-Baugruppe (33) zur Abfuhr der bearbeiteten, scheibenförmigen Werkstücke (W) von dem Spannfutter (21) ausgebildet ist;

jede Vakuumkopf-Baugruppe (32, 33) weist einen Nebenrahmen (36B) auf, der mit Bezug auf den Rahmen (27) der Vakuumkopf-Baugruppe hin- und hergehend geführt ist;

jede Vakuumkopf-Baugruppe (32, 33) weist Schwenkeinrichtungen auf dem Nebenrahmen (36B) und dem Vakuumkopf (34, 35) zur Schwenkung des Vakuumkopfes (34, 35) mit Bezug auf den Nebenrahmen (36D) um eine Achse (E) auf, die senkrecht zur Achse der Hin- und Herbewegung ist, und zwar über einen beschränkten Bogen zwischen einer Lage, in welcher die Achse (A) des Spannfutters (21) und eine Achse des scheibenförmigen Werkstücks (W) parallel zueinander sind, und einer Stellung, in welcher die Achse des scheibenförmigen Werkstücks (W) einen spitzen Winkel zur Achse (A) des Spannfutters (21) einnimmt.

2. Zu- und Abführsystem nach Anspruch 1, dadurch gekennzeichnet, daß jeder Vakuumkopf (34, 35) ein konkaves Teil zum Greifen des scheibenförmigen Werkstücks aufweist, wobei das konkave Teil des abführenden Vakuumkopfes (35) unterschiedliche Abmessungen zu dem des zuführenden Vakuumkopfes (34) aufweist.

3. Zu- und Abführsystem nach Anspruch 1 oder 2, dadurch gekennzeichnet, daß der Rahmen (37) einen Stützarm (39) aufweist, der schwenkbar um die Achse (C) befestigt ist und durch eine Schwenkeinrichtung (40) geschwenkt wird.

4. Zu- und Abführsystem nach einem der Ansprüche 1 bis 3, dadurch gekennzeichnet, daß die Schwenkeinrichtung des Vakuumkopfes (34, 35) mit Bezug auf den Nebenrahmen (36B) einen Kipphebel (45) aufweist, der auf dem Nebenrahmen (36B) schwenkbar befestigt ist, und daß eine Schwenkeinrichtung (43) zum schwenken des Kipphebels (45) um die Achse (E) auf dem Nebenrahmen (36B) befestigt ist.

5. Zu- und Abführsystem nach einem der Ansprüche 1 bis 4, dadurch gekennzeichnet, daß sich federnde Mittel (46, 71) einer axialen Bewegung nachgiebig widersetzen und sich zwischen einem federnd nachgiebigen Kragenteil (47) jedes Vakuumkopfes (34, 35) und einem steifen Bauteil (41) jedes Vakuumkopfes (34, 35) erstrecken.

6. Zu- und Abführsystem nach einem der Ansprüche 1 bis 5, dadurch gekennzeichnet, daß der Zufuhrförderer (22) im Abstand voneinander angeordnete endlose Bänder (50) zum Tragen der scheibenförmigen Werkstücke (W) und einen Anschlag (52A) aufweist, der benachbart der Ladestation angeordnet ist, wobei die Bänder (50) zum Eingriff in die scheibenförmigen Werkstücke (W) und den Anschlag (52A) sowie zum Halten der scheibenförmigen Werkstücke (W) in eine Zuführlage ausgebildet sind.

7. Zu- und Abführsystem nach Anspruch 1, dadurch gekennzeichnet, daß der Antrieb zum Hin- und Herbewegen der Laufkatze (27) entlang der Führungsbahn (26) eine doppel-wirkende Kolben-Motor-Baueinheit (30) aufweist.

8. Zu- und Abführsystem nach Anspruch 1, dadurch gekennzeichnet, daß die Schwenkeinrichtung für jede Vakuumkopf-Baugruppe (32, 33) entlang eines beschränkten Bogens (B) um die Achse (C) eine doppel-wirkende Kolben-Zylinder-Baueinheit (40) aufweist.

9. Zu- und Abführsystem nach Anspruch 1, dadurch gekennzeichnet, daß die Hin- und Herbewegung des Nebenrahmens (36B) durch doppel-wirkende Kolben-Zylinder-Baueinheiten (61) bewirkt werden.

10. Zu- und Abführsystem nach Anspruch 1, dadurch gekennzeichnet, daß die Scwenkeinrichtung für jeden Vakuumkopf (34, 35) mit Bezug auf den Nebenrahmen (36B) um die Achse (E) doppelwirkende Kolben-Zylinder-Baueinheiten (43) aufweist.

11. Zu- und Abführsystem nach Anspruch 7, 8, 9 oder 10, dadurch gekennzeichnet, daß Anschlagseinrichtungen zur Begrenzung des Weges jeder der doppelwirkenden Baugruppen (30, 40, 61, 43) vorgesehen sind und daß ein Druckmittel-Zufuhrsystem zur Versorgung der doppelwirkenden Baueinheiten (30, 40, 61, 43) aufeinanderfolgend mit den Baugruppen verbunden wird, nachdem der Weg einer in der Folge vorhergehenden doppelwirkenden Baueinheit zurückgelegt ist.

12. Zu- und Abführsystem nach Anspruch 1, dadurch gekennzeichnet, daß die zuführende Vakuumkopf-Baueinheit (32) zum Ergreifen eines Werkstücks (W) auf dem Zufuhrförderer (22) und die abführende Vakuumkopf-Baugruppe (33) zur Abgabe eines bearbeiteten Werkstücks (W) auf dem Abfuhrförderer (23) gleichzeitig betrieben werden.

## FIG. 1

FIG.2

# FIG.3

# FIG.4

# FIG.5

## FIG. 6

## FIG. 7

FIG.8

FIG.9

FIG.10

# FIG.11

FIG.12